# EUROPEAN PATENT SPECIFICATION

(11) **EP 3 425 577 B1**
(45) Date of publication and mention of the grant of the patent: **01.11.2023**
(21) Application number: 18181332.0
(22) Date of filing: 03.07.2018
(51) Int. Cl.: G06Q 20/14, G06Q 20/18, G07F 13/02, G07B 15/06

(54) **SYSTEM AND METHOD FOR PAYING THE REFUELING OF A VEHICLE**
SYSTEM UND VERFAHREN ZUM BEZAHLEN FÜR DAS BETANKEN EINES FAHRZEUGS
SYSTÈME ET PROCÉDÉ POUR PAYER LE RAVITAILLEMENT D'UNE VÉHICULE

(30) Priority: 05.07.2017 IT 201700075277
(43) Date of publication of application: 09.01.2019
(73) Proprietor: MOVYON S.p.A., 00159 Roma (IT)
(72) Inventor: RIBOLINI, Daniele, 00159 Roma (IT); TOLAINI, Sandro, 00159 Roma (IT)
(74) Representative: Pietra, Giulia

(56) References cited:
- EP-A1- 1 944 736
- EP-A1- 2 924 660
- WO-A1-00/75885
- WO-A1-2016/016781
- JP-B2- 4 331 324
- US-A- 6 112 152
- US-A1- 2013 032 635
- US-A1- 2013 098 995

## Description

### Technical field

The present invention relates in general to the field of vehicle fuel payment services. More particularly, the present invention relates to a system and a method for paying the refueling of a vehicle.

### Background art

A refueling at a service station may be paid in different ways, such as cash or electronic money (credit card, debit card, prepaid card, etc.).

Cash payment can be made at the service station's cash desk (if self-service refueling) or directly at the refueling operator (if refueling has been done in served mode).

Payment by electronic money is instead typically carried out by means of a POS device (Point of Sale) available at the service station. The POS device may be a fixed device positioned at the fuel dispenser or at the service station's cash desk. Alternatively, the POS device can be cordless, which is particularly convenient because it allows to pay for refueling done in served mode electronically directly to the refueling operator, without getting out of the vehicle.

On the other hand, systems that support electronic toll services are known, that is, services for automatic toll payment due for transit along motorway sections or pay stretches of road.

Such systems generally comprise an on-board device (also called "OBU", i.e. "On Board Unit") suitable for being installed on board a vehicle, and a plurality of road side devices (also called "RSU", i.e. "Road Side Units ") suitable for being installed on the road, on portals or access gates, or at the toll stations.

In general, both the on-board device and the road side devices are provided with respective radiofrequency communication stages (typically, DSRC stages or "Dedicated Short Range Communication"), which allow the on-board device to exchange data with the road side devices. Such radiofrequency communication stages typically make use of radio carriers, for example in the 5-6 GHz frequency range.

From the point of view of operation, when a vehicle equipped with OBU passes along the special lane reserved for customers of the electronic toll service, a transit sensor (typically an optical sensor) detects and activates the RSU positioned at the toll gate of the reserved lane. The RSU emits a radiofrequency signal, to which the OBU responds by transmitting its unique identification code OBU-id. The RSU thus records the transit of the vehicle, determines the amount to be paid and sends the amount and the OBU-id to a toll system, to which the user of the OBU has previously registered.

IT 1 419 164 describes a refueling automatic payment system that uses RSUs and OBUs of the type used for electronic toll services. An RSU and a vehicle presence sensor (for example a photocell or inductive loops) are positioned at each dispenser. When a vehicle equipped with an OBU reaches the dispenser, it is detected by the presence sensor, which activates the RSU. Upon activation, the RSU emits a radiofrequency signal, in response to which the OBU transmits its own identifier. Then, the RSU activates the dispenser and, at the end of refueling, obtains from it the amount to be paid and associates it with the OBU identifier for the subsequent stages of finalization of the payment, similar to those already used by the electronic toll services .

EP 2 924 660 describes a fuel payment system that makes use of OBUs for electronic toll payment, in which each dispenser of a service station has integrated a respective POS terminal, possibly equipped with a portable OBU reader connected to it via a wired connection and possibly a safety rope.

JP 4 331 324 B2 discloses a system to automatically settle a payment for gas, wherein each weighing device of a gas station is provided with a wireless communication apparatus for receiving a signal sent from each on-board communication device installed in each customer's car. A gas station managing center is connected to ETC managing center of a high way automatic fee collection system ETC. A payment for gas is settled through the gas station managing center and ETC managing center based on an ID number stored in the on-board communication device.

### Summary of the invention

The inventors have observed that these known systems have some disadvantages.

Regarding the system of IT 1 419 164, its installation (in particular the installation of the RSUs and presence sensors) at the dispensers of the service station disadvantageously involves the execution of civil works (construction of arches, excavations, etc.) complex and expensive.

Furthermore, to ensure that the RSU associated with each dispenser is activated only when a vehicle actually approaches the dispenser itself (and not to the one next thereto, for example), it may be necessary to implement very complex presence sensor systems and other mechanisms. for checking the position of vehicles inside the service area (bars, lane delimiters, etc.) which, in addition to being expensive and complex to carry out, can make the traffic inside the service station difficult.

Also the electromagnetic compatibility aspect requires a rather complex management, due to the high transmission powers typically used by the RSUs.

Furthermore, disadvantageously, in the system of IT 1 419 164 the payment of the supply must necessarily be made while the vehicle is in the coverage area of the RSU, i.e. near the dispenser. If, after refueling, the user moves the vehicle inside the service station, for example to approach a kiosk and make other purchases, the payment of the supply can no longer be made.

The system of EP 2 924 660 also has some disadvantages. The integration of POS terminals in the dispensers requires in fact to modify each single dispenser of the service station in which the system is to be implemented. Moreover, even in the system of EP 2 924 660 the user is not free to move the vehicle inside the service station before having finished the payment, which can only be done within the perimeter allowed by the length of the wired connection and the safety rope connecting each OBU reader to the respective POS terminal. Wired connections and ropes between POS terminals and OBU readers can also be a hindrance and could easily be crushed by vehicles when maneuvering near the dispensers.

An object of the present invention is to provide a system and a method for paying the refueling for a vehicle which solves the aforementioned problems.

In particular, an object of the present invention is to provide a system and a method for the payment of the refueling to a vehicle, which allows a user of an electronic toll service to use his own OBU also for the payment of fuel and, at the same time, does not require the execution of expensive and complex civil works or interventions on the dispensers at the service station, exhibits fewer critical issues from the point of view of electromagnetic compatibility, does not result in an obstacle to traffic within the service station and allows payment to be made anywhere within the service station.

According to embodiments of the present invention, these problems are solved by a system for the payment of the refueling to a vehicle having an electronic toll OBU installed onboard, which comprises a central apparatus located at a service station and a set of portable terminals available at the service station, each of which is connected via radio to the central apparatus. The central apparatus is connected to a service station management system and to an electronic toll system with which the OBU is registered. Each portable terminal is suitable for communicating via radio with the OBU, when it is brought close to the vehicle. Following refueling at any of the service station dispensers, the refueling operator manually activates any of the portable terminals available at the service station, which receives the amount to be paid from the service station management system through the central apparatus. The operator then approaches the vehicle, so that the mobile terminal can retrieve the unique identifier OBU-id of the OBU. The mobile terminal then sends a payment request including the amount to be paid and the identifier OBU-id to the electronic toll system, through the central apparatus connected to it.

The payment system according to the present invention therefore allows the use of the OBU for electronic toll payment also for the payment of fuel, with the consequent advantages, namely: possibility to pay without getting out of the car, without having to bring cash or electronic money, and also without having to perform any operation (PIN entry, signature or other type of authorization).

Differently from the system of IT 1 419 164, the recovery of the unique OBU identifier for the payment of refueling, however, is carried out not by RSUs located in a fixed position that are activated automatically upon detection of the presence of the vehicle by suitable presence sensors, but from portable terminals available at the service station that are activated by the refueling operators. This involves some advantages.

First of all, the system can be easily implemented inside the service station, without requiring the execution of expensive and complex civil works, or the creation of structures that can be an obstacle to the traffic inside the service station. In fact, the system comprises a single central apparatus, which can be located in a fixed position at any selected point of the service station, without having to build any special structure or perform excavation. The portable terminals, on the other hand, by their nature do not require any physical installation work at the service station. Moreover, since these portable terminals are activated by the refueling operators, it is not necessary to provide in the service station any presence sensor system, or any mechanism for checking the position of the vehicles inside the service area (bars, lane delimiters, etc.).

Moreover, since the terminals are portable, to establish a dialogue with the OBU they can be brought close to the vehicles, at a distance of a few tens of centimeters from the OBU. This means that their transmission power can be reduced considerably compared to the transmission powers typical of the RSU for electronic toll payment, with a consequent reduction in the impact of the system from the point of view of electromagnetic compatibility.

Furthermore, since the terminals are portable and connected via radio to the central apparatus, the payment of the refueling can be made at any point in the service station. If, therefore, after refueling, the user moves the vehicle inside the service station, for example to approach a kiosk and make other purchases, the payment of the refueling can still be made, as it is sufficient that a refueling operator provided with a portable terminal approaches the vehicle.

Moreover, advantageously, no modification of the dispensers is necessary. All portable terminals are in fact connected to the central apparatus only, which is in turn connected to the service station management system. The dispensers therefore continue to interact only with the service station management system, from which the central apparatus retrieves all the information necessary to make the payment, and then supplies it to the various portable terminals.

The present invention provides a system as provided by appended independent claim 1 and a method as provided by appended independent claim 13.

Preferably, the system's central apparatus is configured to, upon receiving a request to obtain the amount to be paid from any portable terminal of the set of portable terminals, receive from the management system a list of dispensers of the service station with the respective amounts of the last refueling supplied, the portable terminal being configured to receive such a list from the central apparatus, the amount to be paid being selectable by the refueling operator from such list.

According to alternative embodiments, the central apparatus can be implemented within the management system. In this case, the management system could be centralized for all the service stations and the software of the central apparatus could also be centralized. For the purposes of the present description and of the claims, the expression "a central apparatus suitable for being located at a service station, the central apparatus being connected to a management system of the service station" is considered to include also the aforesaid alternative embodiments.

Preferably, the central apparatus is connected to the management system by means of a LAN (Local Area Network) implemented within the service station.

Preferably, the system also includes a proxy server that acts as an intermediary between the central apparatus and the electronic toll system, the central apparatus being connected to the proxy server via a mobile radio network to which the proxy server is connected via a private APN (Access Point). Network).

Preferably, the payment request also includes an identifier of the portable terminal and the proxy server is configured to validate the payment request on the basis of the identification of the portable terminal.

Preferably, the proxy server is configured to verify that the payment request is sent from the portable terminal within a predefined time since the completion of the refueling and to forward the payment request to the electronic toll system only in the affirmative case.

Preferably, the portable terminal is a palm-sized cordless terminal for use by the refueling operator.

Preferably, the transmission power from the central apparatus to the set of portable terminals is less than 25mW.

According to preferred embodiments, the radio link between each portable terminal of the set of portable terminals and the central apparatus provides at least one of the following security mechanisms:
- the central apparatus is configured to emit radio signals not visible to devices other than the set of portable terminals; and/or
- the central unit is configured with a list of MAC addresses authorized to join its radio network; and / or
- communication along the radio link between the central apparatus and the set of portable terminals is encrypted.

Preferably, each portable terminal is configured to, upon its activation, present on its display a list of operations that can be performed, such operations comprising a payment transaction, and to send to the management system through the central apparatus a request for obtain the amount to be paid in response to the selection of the payment transaction from the list of operations by the refueling operator.

Preferably, the central apparatus is configured to receive from the electronic toll system a notification of successful or unsuccessful payment and to forward the notification to the management system and to the mobile terminal.

Preferably, the system is configured to, after the electronic toll system has performed the payment transaction according to said payment request, request the electronic toll system to perform a cancellation of this payment transaction.

### Brief description of the drawings

The present invention will become clearer from the detailed description that follows, given purely by way of a non-limiting example, with reference to the attached drawings, wherein:
- Figure 1 schematically shows a system for the payment of refueling to a vehicle according to an embodiment of the present invention;
- Figure 2 is a flow chart relating to a payment transaction performed by the system shown in Figure 1; and
- Figure 3 is a flow chart relating to a cancellation operation performed by the system shown in Figure 1.

### Detailed description of embodiments of the invention

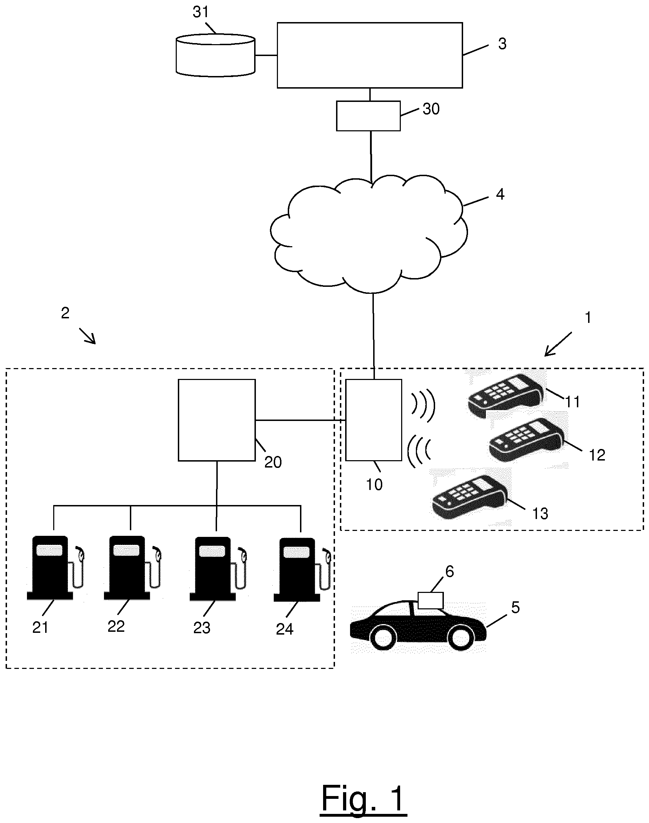

Figure 1 schematically shows a system 1 for the payment of refueling to a vehicle according to an embodiment of the present invention.

The payment system 1 comprises a central apparatus 10 and one or more portable terminals. By way of a non-limiting example, in Figure 1 three portable terminals 11, 12 and 13 are shown.

The central apparatus 10 is preferably a computer located at a service station 2, which comprises a management system 20 of the service station 2 and a number of fuel dispensers connected to the management system 20. In Figure 1, by way of a non-limiting example, four dispensers 21, 22, 23 and 24 connected to the management system 20 are shown.

The central apparatus 10, for example, can be an ARES industrial computer with a Linux operating system.

The central apparatus 10 is preferably connected to the management system 20. Preferably, this connection is implemented by means of a LAN (Local Area Network) made within the area of the service station 2. For example, the LAN uses technology Ethernet. To access the LAN, in this case, both the management system 20 of the service station 2 and the central apparatus 10 of the payment system 1 are provided with respective Ethernet interfaces.

According to alternative embodiments not shown in the drawings, the central apparatus 10 can be implemented within the management system 20. In this case the management system 20 could be centralized for all the service stations. Once the system 20 has been centralized, the software of the central software 10 could also be centralized.

The central apparatus 10 is also preferably connected to an electronic toll system 3, located in a remote position with respect to the service station 2. The electronic toll system 3 preferably supports an electronic toll service and, optionally, other telematic traffic services, such as example electronic parking payment.

The central apparatus 10 is connected to the electronic toll system 3 through a proxy server 30 dedicated to the transactions relating to the payment of fuel, which acts as an intermediary between the central apparatus 10 and the electronic toll system 3.

The connection between the central apparatus 10 and the proxy server 30 is preferably implemented by a communications network 4. The communications network 4 preferably comprises at least one mobile radio network, for example a UMTS network, to which the proxy server 30 is connected via a private APN (Access Point Network). According to embodiments of the invention, through the UMTS network, the central apparatus 10 communicates with a configuration system. The central apparatus 10, upon power-up, makes a call to said configuration system which sends it a configuration (for example, how many terminals can be connected in terms of ID and MAC address, address of the electronic toll collection system, information concerning any SW updates of the central system and terminals).

The electronic toll system 3 preferably cooperates with a database 31, in which stores data relating to the users registered to the electronic toll service supported by the electronic toll system 3. In particular, for each user registered with the service, personal data, payment data (account number or credit card number), identifier of the on-board device (OBU) associated to the user, number plates of the vehicles on which the user wishes to use the associated OBU, transaction history, etc. are stored.

Preferably, each portable terminal 11, 12, 13 is a cordless terminal for use by refueling operators within service station 2.

Each portable terminal 11, 12, 13 in particular is suitable for connecting via radio to the central apparatus 10 of the payment system 1, when it is activated by a refueling operator. For this purpose, both the central apparatus 10 and each portable terminal 11, 12, 13 preferably comprise respective radiofrequency transceivers (not shown in the drawings). These radiofrequency transceivers are preferably implemented using a technology that guarantees a coverage comparable to the extension of the service area 2. In this way, the radio connection between each portable terminal 11, 12, 13 and the central apparatus 10is ensured, independently from the point of the service station 2 in which the portable terminal 11, 12, 13 is located. For example, the connection between central apparatus 10 and portable terminals 11, 12, 13 can be implemented using Wi-Fi technology.

Preferably, each portable terminal 11, 12, 13 is associable with anyone of the dispensers 21, 22, 23 and 24 connected to the management system 20 of the service station 2. This means that each portable terminal 11, 12, 13 has neither physical nor logical permanent connection with any of the dispensers 21, 22, 23 and 24 such that it can be used exclusively for the payment of refueling supplied by such dispenser. On the contrary, as will be described in greater detail below, each portable terminal 11, 12, 13 can be temporarily associated in use with any of the dispensers 21, 22, 23 and 24, i.e. it can be used for the payment of the refueling supplied by one or the other of the dispensers 21, 22, 23 and 24, depending on the choice of the refueling operator who is using the portable terminal.

Preferably, the connection between central apparatus 10 and portable terminals 11, 12, 13 provides at least one of the following security mechanisms:
- the central apparatus 10 emits radio signals not visible to devices other than the portable terminals 11, 12, 13. In other words, no device other than the portable terminals 11, 12, 13 is able to find the radio identifier SSID of the central apparatus 10. The portable terminals 11, 12, 13, on the other hand, are enabled only for connection to the central apparatus 10;
- at the moment of its configuration, the central apparatus 10 is configured with a list of the MAC addresses authorized to join its radio network. Each portable terminal 11, 12, 13 therefore has its own unique MAC address included in the list. If a device with a MAC address not included in the list attempts to join the radio network of the central apparatus 10, it will not be authorized;
- communication between central apparatus 10 and portable terminals, 11, 12, 13 is preferably encrypted. For example, a WPA2-PSK mechanism with TKIP or AES encryption and a key of at least 24 characters including numbers, uppercase and lowercase letters, and special characters (!, $, @, etc.) may be used.

Optionally, the central apparatus 10 can also be provided with a firewall.

Preferably, each portable terminal 11, 12, 13 is also adapted to connect via radio to any on-board devices (in short, OBU) for electronic toll payment which may be on board vehicles entering the service station 2 to refuel. For this purpose, each portable terminal 11, 12, 13 preferably comprises a user-side radiofrequency transceiver, compatible with the radiofrequency transceivers that the OBUs supplied to the users of the electronic toll service supported by the electronic toll system 3 use for communication with the RSUs. As a non-limiting example, these radiofrequency transceivers can be implemented with DSRC technology (acronym for "Dedicated Short Range Communications") which, as is known, provides radio channels and authentication, encoding and decoding procedures that have been specifically developed for telematic traffic services and makes use of frequency bands around 5.7-5.9 GHz. These transceivers preferably operate according to the UNI-10607 regulation of 1996, or according to the European ETSI ES 200 674-1 of 1999.

Preferably, the user-side radiofrequency transceiver of each portable terminal 11, 12, 13 is configured to transmit with a power level such that its coverage radius is less than 1.5 meters, more preferably less than 1.2 m, for example comprised between 40 cm and 50 cm. According to embodiments, the specifications of the RF antenna on the terminal are as follows:
- frequency band: 5725-5875 MHz.
- transmission power <25 mW e.i.r.p.
- receiver sensitivity ≤ -96 dBm @ BER = 10⁻³.

In this way, advantageously, it is ensured that when a portable terminal 11, 12, 13 is brought close to a vehicle, it connects via radio to the OBU of that vehicle, and not of another vehicle located next to it. Moreover, advantageously, the power level thus contained reduces the impact of the system from the point of view of electromagnetic compatibility.

Preferably, each portable terminal 11, 12, 13 is provided with a respective input/output interface, through which the refueling operator who uses it can interact with the system 1, as will be described in greater detail herein below. The input/output interface preferably includes a display and buttons. Each portable terminal 11, 12, 13 preferably also comprises one or more luminous indicators (preferably of the LED type) which indicate the connection to the central apparatus 10.

Preferably, each portable terminal 11, 12, 13 is also provided with a microprocessor (for example, an ARM7 CPU) and a rechargeable battery. Optionally, each portable terminal 11, 12, 13 can also be provided with a module for the management of encryption keys.

Each portable terminal 11, 12, 13 preferably is palm-sized, so that it can be easily gripped by the refueling operator.

Preferably, the payment system 1 cooperates with a configuration system (not shown in the drawings) adapted to configure the components of the system 1, in particular the central apparatus 10. This configuration system is preferably in a remote position (i.e. it is not located near the service station 2) and can be suitable for configuring not only the central apparatus 10 of the system 1, but also the central apparatus of other payment systems located at other service stations and managed by the same operator (typically, the same which provides the electronic toll service supported by the electronic toll system 3).

The configuration system in particular is configured to provide the central apparatus 10 with a set of configuration information comprising one or more of:
- a list of portable terminals enabled for the radio connection with the central apparatus 10;
- the IP address of the management system 20 of the service station 2, to be used to communicate with it;
- the IP address of the central apparatus 10, to be used for communications with the management system 20 of the service station 2; and
- the type of protocol to be used for communications between the central apparatus 10 and the management system 20 of the service station 2.

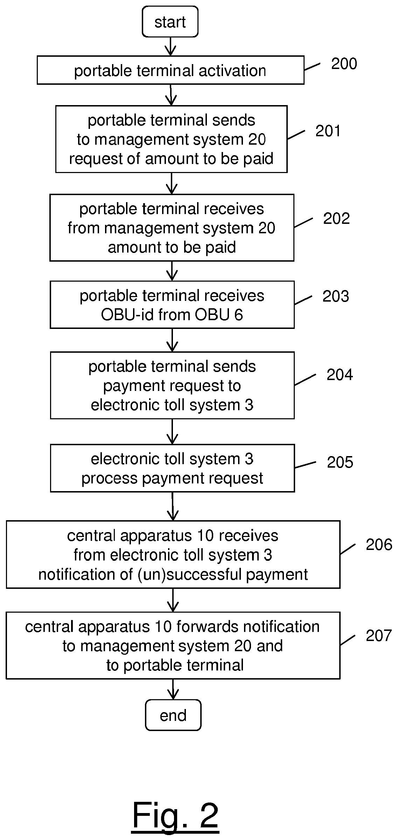

With reference to the flow chart of Figure 2, the operation of the payment system 1 will now be described.

The operation of the system 1 begins after a vehicle 5 equipped with an on-board device (OBU) 6 for the use of the services provided by the electronic toll system 3 has carried out a refueling in served mode at one of the dispensers 21, 22, 23, 24 of the service station 2, for example the dispenser 24 (situation shown schematically in Figure 1).

After the refueling has ended, the refueling operator takes one of the portable terminals 11, 12, 13 of the system 1 available at the service station 2 and activates it (step 200). For example, activation can be done by pressing a suitable button on the portable terminal (for example, the mobile terminal 11). At switch-on, the portable terminal 11 preferably presents on its display a first screen, which presents to the refueling operator a menu with a list of the operations that can be performed ("payment" or "cancellation").

If the employee selects the "payment" option, the portable terminal 11 establishes a radio link with the central apparatus 10 and sends a request to obtain the amount to be paid to the management system 20 of the service station 2 through the central apparatus 10 (step 201).

In response to this request, the portable terminal 11 receives from the management system 20 through the central apparatus 10 the amount to be paid (step 202). In particular, step 202 preferably provides that the portable terminal 11 receives from the management system 20 through the central apparatus 10 a list of the dispensers 21, 22, 23, 24 of the service station 2, together with the last amount due for last refueling carried out by each of them. According to an advantageous variant, for each dispenser the portable terminal 11 receives from the management system 20 a list of the amounts due for the last supplies made (3-5 last supplies made). During step 202, the portable terminal 11 preferably displays this information on its display. In particular, the portable terminal 11 displays on its display a first screen with the list of the dispensers of the service station 2. The operator selects the dispenser used from this list and, in response, the portable terminal 11 displays a second screen with the list of the amounts due for the last supplies made by the selected dispenser. The operator then selects the amount to be paid from the latter list.

From the above, it is therefore apparent that the portable terminal 11 can be temporarily associated in use with any of the dispensers 21, 22, 23 and 24, i.e. it can be used for the payment of the refueling supplied by one or the other of the dispensers 21, 22, 23 and 24, depending on the choice of the refueling operator who is using it. On the other hand, the refueling provided by each dispenser 21, 22, 23, 24 can be paid via any of the portable terminals 11, 12, 13 available at the service station. If the mobile terminal 11 is faulty, therefore, the refueling operator can still complete the payment, provided that among the other terminals 12 and 13 available at the service station 2 there is one free (i.e. not in use by other refueling operators).

The portable terminal 11 then retrieves from OBU 6 its unique identifier OBU-id (step 203). To allow the portable terminal 11 to perform this operation, the refueling operator approaches the portable terminal 11 to the vehicle 5, so that the OBU 6 enters its coverage area (which, as discussed above, preferably has a radius of a few tens of centimeters). For this purpose, the portable terminal 11 can have on its display a screen that invites the operator to approach the vehicle 5.

Through the central apparatus 10, the portable terminal 11 therefore preferably sends to the electronic toll system 3 a payment request through the proxy server 30 (step 204). This payment request preferably includes at least the amount to be paid as determined in step 202 and the unique identifier OBU-id retrieved in step 203. The payment request preferably also includes an identifier of the portable terminal 11 and, optionally, other additional information such as : liters delivered, type of fuel, identification of the service station and / or the dispenser used.

According to an advantageous variant, before submitting the payment request to the electronic toll system 3, at step 204 the proxy server 30 verifies that the payment request is sent by the portable terminal 11 within a pre-established time from completion of the refueling. This time can be a few minutes, for example 10 minutes. This advantageously allows avoiding the fraudulent use of the system 1 by the refueling operator, who - for example - could at the end of the day try to recover unpaid amounts from other users, simply by approaching a portable terminal to their OBU.

According to an advantageous variant, before submitting the payment request to the electronic toll system 3, at step 204 the proxy server 30 preferably validates the payment request, i.e. verifies that the portable terminal that sent it and that is identified by the identifier contained in the payment request is authorized to send payment requests to the electronic toll system 3.

The electronic toll system 3 then processes the payment request (step 205). In particular, in step 205, the electronic toll system 3 preferably checks whether the OBU 6 identified by the OBU-id contained in the received payment request belongs to a user registered in the database 31 and if the payment conditions exist (for example, credit enough). In the affirmative, the electronic toll system 3 authorizes the payment through the methods (current account or credit card) indicated by the user when registering on the database 31. Otherwise, if the user is not registered and / or the conditions do not exist to make the payment, the electronic toll system 3 does not authorize any payment. In any case, step 205 preferably provides that, at the end of processing the payment request, the electronic toll collection system 3 sends to the user a notification of successful or unsuccessful payment, for example in the form of an SMS sent to his / her cell phone. In case of successful payment, this notification has the value of receipt.

Preferably, for the whole duration of the phase 205, the portable terminal 11 remains on hold and displays on its display a waiting screen ("payment in progress ...").

Preferably, also the central apparatus 10 of the system 1 receives from the electronic toll system 3 - through the proxy server 30 - a notification of successful or unsuccessful payment (step 206).

The central apparatus 10 preferably forwards this notification both to the management system 20 (which thus closes the transaction), and to the portable terminal 11, so as to inform also the refueling operator about the outcome of the payment procedure (step 207). Preferably, the operator is informed by the portable terminal 11 by displaying on its display a further screen that confirms the outcome (positive or negative) of the payment transaction. The refueling operator can then deactivate the portable terminal 11, which then disconnects from the central apparatus 10.

The payment system according to the present invention therefore allows the user to use his own OBU 6 already registered on the electronic toll system 3 also for the payment of fuel. This is advantageous, since it allows the user to pay without using either cash or electronic money, without leaving the vehicle 5 and without having to perform any operation (PIN, signature or other type of authorization) at the time of payment.

On the other hand, the retrieval of the unique identifier OBU-id of the OBU 6 carried out by the portable terminal 11 available at the service station 2, activated by the refueling operator, entails other advantages.

First of all, the system 1 can be easily implemented inside the service station 2, without requiring the execution of expensive and complex civil works, or the creation of structures that can be an obstacle to the traffic inside the service station. 2. The system 1 comprises in fact a single central apparatus 10, which can be located in a fixed position at any selected point of the service station 2, without having to construct any suitable structure or perform excavations. The portable terminals 11, 12, 13, on the other hand, by their nature do not require any physical installation work at the service station 2.

Furthermore, since the portable terminal 11 is activated by the refueling operator, it is not necessary to provide in the service station 2 any presence sensor system, or any mechanism for monitoring the position of the vehicles inside the service area (bars, lane delimiters, etc.).

Moreover, since the terminals 11, 12, 13 are portable, to establish a dialogue with the OBU 6 they can be brought near the vehicle 5, at a distance of a few tens of centimeters from the OBU 6. This means that their transmission power can be reduced considerably compared to the transmission powers typical of the RSU for electronic toll, with a consequent reduction of the impact of the system 1 from the point of view of electromagnetic compatibility.

Moreover, since the terminals 11, 12, 13 are portable and connected to the central apparatus via radio 10, the payment of the refueling can be made at any point of the service station 2. If, therefore, after refueling, the user moves the vehicle 5 inside the service station 2, for example to approach a kiosk and make other purchases, the payment of the refueling can still be made, as it is sufficient that a refueling operator provided with a portable terminal 11, 12, 13 approaches the vehicle 5.

Moreover, advantageously, no modification of the dispensers 21-24 is required. All the portable terminals 11, 12, 13 are in fact connected only to the central apparatus 10, which is in turn connected to the management system 20 of the service station 2. The dispensers 21-24 then continue to interact only with the management system 20, from which the central apparatus 10 retrieves all the information necessary to make the payment, and then supplies them to the various portable terminals 11, 12, 13.

The system 1 is preferably also configured to perform payment cancellation operations. For example, the cancellation can be made in the event that the user of the vehicle 5 has refueled but has been charged an incorrect amount. The cancellation operation is preferably managed by the refueling operator through the same portable terminal 11 that handled the payment, given that it is the last payment handled by the portable terminal 11 and, of course, that the vehicle 5 has not yet left the service station 2.

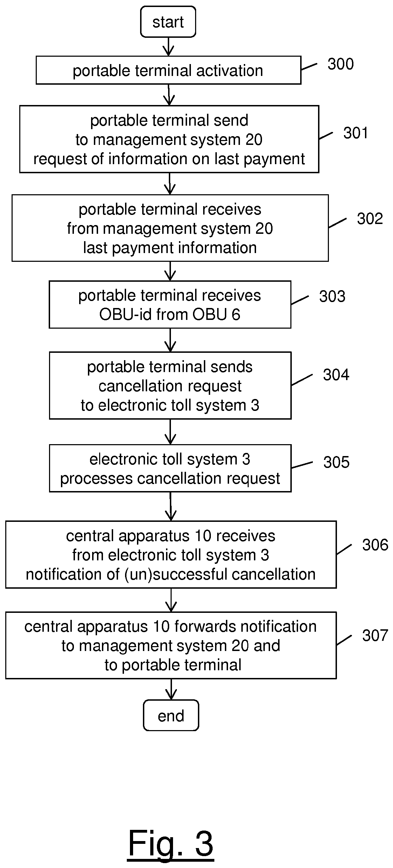

The payment cancellation operation will now be described in detail with reference to the flowchart of Figure 3.

When the refueling operator wishes to make a cancellation, he activates the portable terminal 11 through which he made the payment to be canceled (step 300). As described above, activation can be performed by pressing a suitable button of the portable terminal 11, so that the portable terminal 11 has on its display the aforementioned first screen, which presents to the refueling operator the menu with the list of operations that can be made (payment or cancellation).

If the employee selects the "cancellation" option, the portable terminal 11 preferably connects to the central apparatus 10 via radio and sends to the management system 20 of the service station 2 a request for information relating to its last payment made (step 301).

In response to the request, the portable terminal 11 receives from the management system 20 through the central apparatus 10 the information relating to the last payment made (step 302). In particular, step 302 preferably provides that the portable terminal 11 receives from the management system 20 through the central apparatus 10 the identifier of the last transaction it has made, possibly together with other information such as the amount to be reversed, the type of fuel, the identifier of the dispenser, assigned by the management system 20, which has supplied the refueling whose payment is to be canceled. During step 302, the portable terminal 11 preferably displays this information on a screen of its display ("You are canceling x euro, dispenser y, fuel type z").

The portable terminal 11 then retrieves from the OBU 6 its unique identifier OBU-id (step 303). In order to allow the portable terminal 11 to perform this operation, the refueling operator again brings the portable terminal 11 back to the vehicle 5, so that the OBU 6 enters its coverage area (which, as discussed above, preferably has a radius of a few tens of centimeters). For this purpose, the portable terminal 11 may again present on its display a screen which invites the operator to approach the vehicle 5.

Through the central apparatus 10, the portable terminal 11 therefore preferably sends to the electronic toll system 3 a cancellation request through the proxy server 30 (step 304). This cancellation request preferably includes at least the identifier of the transaction to be cancelled as retrieved at step 302 and the unique identifier OBU-id retrieved at step 303. The cancellation request preferably also includes an identifier of the portable terminal 11.

According to an advantageous variant, before forwarding the cancellation request to the electronic toll system 3, at step 304 the proxy server 30 preferably validates the cancellation request, i.e. verifies that the portable terminal that sent it and that is identified by the identifier contained in the cancellation request is authorized to send cancellation requests to the electronic toll system 3.

The electronic toll system 3 then processes the cancellation request (step 305). In particular, at step 305 the electronic toll system 3 preferably checks whether the OBU 6 identified by the OBU-id contained in the received cancellation request belongs to a user registered in the database 31 and whether the conditions for the cancellation exist. If so, the electronic toll system 3 authorizes the cancellation. Otherwise, if the user is not registered and / or there are no conditions to make the cancellation, the electronic toll system 3 does not authorize any cancellation. In any case, step 305 preferably provides that, at the end of processing the cancellation request, the electronic toll system 3 sends a notification of successful or unsuccessful cancellation to the user, for example in the form of an SMS sent to his / her cell phone. In the event of successful cancellation, this notification has the value of receipt.

Preferably, for the whole duration of step 305, the mobile terminal 11 waits and displays on its display a waiting screen ("cancellation in progress ...").

Preferably, also the central apparatus 10 of the system 1 receives from the electronic toll system 3 - through the proxy server 30 - a notification of successful or unsuccessful cancellation (step 306).

The central apparatus 10 preferably forwards this notification both to the management system 20 (which thus marks the transaction as cancelled), and to the portable terminal 11, thus also informing the refueling operator about the outcome of the cancellation procedure (phase 307). Preferably, the operator is informed by the portable terminal 11 by displaying on its display a further screen that confirms the outcome (positive or negative) of the cancellation operation.

Advantageously, the system 1 is also configured to perform transaction annulment operations. For example, annulment can be made if the OBU 6 was fraudulently subtracted from third parties who then used it to refuel. Preferably, the annulment of a transaction must be requested by the user within a maximum time from the conclusion of the transaction (for example, 1 day), by sending a text message, or via a private area on the site of the service provider electronic toll, or by contacting the customer service center (call, chat, etc.) made available by the electronic toll service provider. In this case, the annulment is managed directly by the electronic toll system 3, which annuls the transaction and inserts the OBU 6 into a "black list" of OBUs that can not be used for any of the services supported by the electronic toll system 3.

## Claims

1. A system (1) for paying refueling of a vehicle (5) having an on-board device (6) installed thereon which supports an electronic toll service, said system (1) comprising:
- a central apparatus (10) suitable for being installed at a service station (2), said central apparatus (10) being connected with a management system (20) of said service station (2) and with an electronic toll system (3) at which said on-board device (6) is registered;
- a set of portable terminals (11, 12, 13) available at said service station (2), each portable terminal (11, 12, 13) being connected via radio with said central apparatus (10) and suitable for communicating via radio with said on-board device (6), each portable terminal (11, 12, 13) of said set of portable terminals available at said service station (2) being associable to each dispenser (21, 24) of said service station (2),
wherein each portable terminal (11, 12, 13) is configured to, after activation thereof by a refueling operator after said refueling of said vehicle (5) has been completed at said service station (2), receive from said management system (20) through said central apparatus (10) an amount to be paid for said refueling, receive via radio from said on-board device (6) a unique identifier of said on-board device (6) and send to said electronic toll system (3) through said central apparatus (10) a payment request comprising said amount to be paid and said unique identifier of said on-board device (6).

2. The system (1) according to claim 1, wherein said central apparatus (10) is configured to, upon reception of a request to obtain said amount to be paid from anyone of said set of portable terminals (11, 12, 13), receive from said management system (20) a list of dispensers (21, 22, 23, 24) of said service station (2) with the respective amounts to be paid for the last refueling supplied, said portable terminal (11, 12, 13) being configured to receive said list from said central apparatus (10), said amount to be paid being selectable by said refueling operator from said list.

3. The system (1) according to any of the preceding claims, wherein said central apparatus (10) is connected with said management system (20) by means of a LAN, Local Area Network, implemented within said service station (2).

4. The system (1) according to any of the preceding claims, further comprising a proxy server (30) acting as an intermediary between said central apparatus (10) and said electronic toll system (3), said central apparatus (10) being connected with said proxy server (30) via a mobile radio network (4) to which said proxy server (30) is connected via a private APN, Access Point Network,.

5. The system (1) according to claim 4 wherein payment request also comprises an identifier of said portable terminal (11, 12, 13) and wherein said proxy server (30) is configured to validate said payment request based on said identifier of said portable terminal (11, 12, 13).

6. The system (1) according to claim 4 or 5, wherein said proxy server (30) is also configured to check whether said payment request is sent from said portable terminal (11, 12, 13) within a predetermined time since completion of said refueling and to forward said payment request to said electronic toll system (3) only in the affirmative.

7. The system (1) according to any of the preceding claims, wherein the transmission power of said central apparatus (10) towards said set of portable terminals (11, 12, 13) is less than 25 mW.

8. The system (1) according to any of the preceding claims, wherein a radio connection between each portable terminal of said set of portable terminals (11, 12, 13) and said central apparatus (10) is provided with at least one of the following security mechanisms:
- said central apparatus (10) is configured to transmit radio signals not visible to devices other than said set of portable terminals (11, 12, 13); and/or
- said central apparatus (10) is configured with a list of MAC addresses authorized to associate to its radio network; and/or
- communications along said radio link between said central apparatus (10) and said set of portable terminals (11, 12, 13) are encrypted.

9. The system (1) according to any of the preceding claims, wherein each portable terminal (11, 12, 13) is configured to, upon activation thereof, show on a display thereof a list of possible operations, said list of possible operations comprising a payment operation, and send to said management system (20) through said central apparatus (10) a request for obtaining said amount to be paid in reply to selection of said payment operation from said list of possible operations by said refueling operator.

10. The system (1) according to any of the preceding claims, wherein said central apparatus (10) is configured to receive from said electronic toll system (3) a successful or unsuccessful payment notification and to forward said successful or unsuccessful payment notification to said management system (20) and to said portable terminal (11, 12, 13).

11. The system (1) according to any of the preceding claims, wherein said system (1) is further configured to, after said electronic toll system (3) has performed said payment operation according to said payment request, request to said electronic toll system (3) a cancellation of said payment operation.

12. The system (1) according to any of the preceding claims, wherein said central apparatus (10) is implemented within said management system (20) of said service station (2).

13. A method for paying a refueling of a vehicle (5) having an on-board device (6) installed onboard, said on-board device (6) supporting an electronic toll service offered by an electronic toll system (3) to which said on-board device (6) is registered, said method comprising:
- after said refueling has been completed at a service station (2), activating by a refueling operator any portable terminal (11, 12, 13) selected amongst a set of portable terminals (11, 12, 13) available at said service station (2), each portable terminal (11, 12, 13) being connected via radio with a central apparatus (10) placed at said service station (2) and connected with said electronic toll system (3), each portable terminal (11, 12, 13) being suitable for communicating via radio with said on-board device (6), each portable terminal (11, 12, 13) of said set of portable terminals available at said service station (2) being associable to each dispenser (21, 24) of said service station (2);
- at said portable terminal (11, 12, 13), receiving an amount to be paid for said refueling from a management system (20) of said service station (2) through said central apparatus (10);
- at said selected portable terminal (11, 12, 13), receiving via radio from said on-board device (6) a unique identifier of said on-board device (6); and
- sending from said portable terminal (11, 12, 13) to said electronic toll system (3) through said central apparatus (10) a payment request comprising said amount to be paid and said unique identifier of said on-board device (6).

## Patentansprüche

1. System (1) zum Bezahlen des Betankens eines Fahrzeuges (5), an dem eine Bordvorrichtung (6) installiert ist, welche einen elektronischen Gebührenservice unterstützt, wobei das genannte System (1) aufweist:
- eine Zentralvorrichtung (10), die für den Einbau an einer Tankstelle (2) geeignet ist, wobei die genannte Zentralvorrichtung (10) mit einem Managementsystem (20) der genannten Tankstelle (2) und mit einem elektronischen Gebührensystem (3), bei welchem das genannte Bordgerät (6) registriert ist, verbunden ist;
- einen Satz von portablen Endgeräten (11, 12, 13), welche an genannter Tankstelle (2) verfügbar sind, wobei jedes portable Endgerät (11, 12, 13) über Funk mit der genannten Zentralvorrichtung (10) verbunden ist und für die Kommunikation über Funk mit der genannten Bordvorrichtung (6) geeignet ist, wobei jedes portable Endgerät (11, 12, 13) des genannten Satzes von an der genannten Tankstelle (2) verfügbaren portablen Endgeräten mit jeder Zapfsäule (21, 24) der genannten Tankstelle (2) in Verbindung gebracht werden kann,
wobei jedes portable Endgerät (11, 12, 13) so ausgestaltet ist, nach dessen Aktivierung durch einen Betankungsbetreiber nach dem das genannte Betanken des genannten Fahrzeuges (5) an der genannten Tankstelle (2) abgeschlossen wurde, von dem genannten Managementsystem (20) über die genannte Zentralvorrichtung (10) einen für das genannte Betanken zu zahlenden Betrag zu empfangen, über Funk von der genannten Bordvorrichtung (6) eine eindeutige Kennung der genannten Bordvorrichtung (6) zu empfangen und an das genannte elektronische Gebührensystem (3) über die genannte Zentralvorrichtung (10) eine Zahlungsanforderung, welche den genannten zu zahlenden Betrag und die genannte eindeutige Kennung der genannten Bordvorrichtung (6) aufweist, zu senden.

2. System (1) nach Anspruch 1, wobei die genannte Zentralvorrichtung (10) so ausgebildet ist, auf Empfang einer Anforderung den genannten, von einem des genannten Satzes an portablen Endgeräten (11, 12, 13) zu zahlenden Betrag zu erhalten, von dem genannten Managementsystem (20) eine Liste der Zapfsäulen (21, 22, 23, 24) von der genannten Tankstelle (2) mit den jeweiligen für die letzte gelieferte Betankung zu zahlenden Beträgen zu empfangen, wobei das genannte portable Endgerät (11, 12, 13) so ausgelegt ist, die genannte Liste von der genannten Zentralvorrichtung (10) zu empfangen, wobei der genannte zu zahlende Betrag aus der genannten Liste durch den genannten Betankungsbetreiber auswählbar ist.

3. System (1) nach einen der vorhergehenden Ansprüche, wobei die genannte Zentralvorrichtung (10) mit dem genannten Managementsystem (20) mittels eines LAN, Local Area Network, welches innerhalb der genannten Tankstelle (2) implementiert ist, verbunden ist.

4. System (1) nach einem der vorhergehenden Ansprüche, weiter aufweisend einen Proxy Server (30), welcher als Mittler zwischen der genannten Zentralvorrichtung (10) und dem genannten elektronischen Gebührensystem (3) fungiert, wobei die genannte Zentralvorrichtung (10) mit dem genannten Proxy Server (30) über ein mobiles Funknetzwerkwerk (4) verbunden ist, zu welchem der genannte Proxy Server (30) über ein privates APN, Access Point Network, verbunden ist.

5. System (1) nach Anspruch 4, wobei die Zahlungsaufforderung auch eine Kennung des genannten portablen Endgerätes (11, 12, 13) aufweist und wobei der genannte Proxy Server (30) ausgestaltet ist, die genannte Zahlungsaufforderung basierend auf der genannten Kennung des genannten portablen Endgerätes (11, 12, 13) zu validieren.

6. System (1) nach Anspruch 4 oder 5, wobei der genannte Proxy Server (30) auch ausgestaltet ist, zu überprüfen, ob die genannte Zahlungsaufforderung von dem genannten portablen Endgerät (11, 12, 13) innerhalb einer vordefinierten Zeit ab Beendigung des genannten Betankens gesendet wurde und die genannte Zahlungsaufforderung an das genannte elektronische Gebührensystem (3) lediglich bestätigend weiterzuleiten.

7. System (1) nach einem der vorhergehenden Ansprüche, wobei die Sendeleistung der genannten Zentralvorrichtung (10) in Richtung des genannten Satzes an portablen Endgeräten (11, 12, 13) kleiner als 25 mW ist.

8. System (1) nach einem der vorhergehenden Ansprüche, wobei eine Funkverbindung zwischen jedem portablen Endgerät des genannten Satzes von portablen Endgeräten (11, 12, 13) und der genannten Zentralvorrichtung (10) mit mindestens einer der folgenden Sicherheitsmechanismen vorgesehen ist:
- die genannten Zentralvorrichtung (10) ist so ausgestaltet, Funksignale zu übertragen, die für Geräte, welche nicht Teil des genannten Satzes an portablen Endgeräten (11, 12, 13) sind, nicht sichtbar sind; und/oder
- die genannte Zentralvorrichtung (10) ist mit einer Liste von MAC-Adressen, welche berechtigt sind, mit ihrem Funknetzwerk in Verbindung zu treten; konfiguriert und/oder
- Mitteilungen entlang der genannten Funkverbindung zwischen der genannten Zentralvorrichtung (10) und dem genannten Satz von portablen Endgeräten (11, 12, 13) sind verschlüsselt.

9. System (1) nach einem der vorhergehenden Ansprüche, wobei jedes portable Endgerät (11, 12, 13) so ausgestaltet ist, bei dessen Aktivierung auf einem zugehörigen Display eine Liste von möglichen Operationen anzuzeigen, wobei die genannte Liste an möglichen Operationen eine Zahlungsoperation aufweist und als Antwort auf die Auswahl der genannten Zahlungsoperation aus der genannten Liste von möglichen Operationen durch den genannten Betankungsbetreiber zu dem genannten Managementsystem (20) über die genannte Zentralvorrichtung (10) eine Aufforderung zum Erhalten des genannten zu zahlenden Betrags zu senden.

10. System (1) nach einem der vorhergehenden Ansprüche, wobei die genannte Zentralvorrichtung (10) so ausgestaltet ist, von dem genannten elektronischen Gebührensystem (3) eine erfolgreiche oder nicht erfolgreiche Zahlungsbenachrichtigung zu empfangen und die genannte erfolgreiche oder nicht erfolgreiche Zahlungsbenachrichtigung an das genannte Managementsystem (20) und an das genannte portable Endgerät (11, 12, 13) weiterzuleiten.

11. System (1) nach einem der vorhergehenden Ansprüche, wobei das genannte System (1) weiter ausgestaltet ist, nachdem das genannte elektronische Gebührensystem (3) die genannte Zahlungsoperation entsprechend der genannten Zahlungsaufforderung durchgeführt hat, gegenüber dem genannten elektronischen Gebührensystem (3) eine Stornierung der genannten Zahlungsoperation anzufordern.

12. System (1) nach einem der vorhergehenden Ansprüche, wobei die genannte Zentralvorrichtung (10) innerhalb des genannten Managementsystems (20) der genannten Tankstelle (2) implementiert ist.

13. Verfahren zum Bezahlen des Betankens eines Fahrzeuges (5), welches eine installierte fahrzeugeigene Bordvorrichtung (6) aufweist, wobei die genannte Bordvorrichtung (6) einen elektronischen Gebührenservice unterstützt, welcher von einem elektronischen Gebührensystem (3) angeboten wird, bei welchem die genannte Bordvorrichtung (6) registriert ist, wobei das genannte Verfahren aufweist:
- dass, nachdem das genannte Betanken an der Tankstelle (2) abgeschlossen wurde, ein portables Endgerät (11, 12, 13), ausgewählt aus einem Satz von portablen Endgeräten (11, 12, 13), welche an der genannten Tankstelle (2) verfügbar sind, durch einen Betankungsbetreiber aktiviert wird, wobei jedes portable Endgerät (11, 12, 13) über Funk mit einer Zentralvorrichtung (10), die an der genannten Tankstelle (2) angeordnet ist und mit dem genannten elektronischen Gebührensystem (3) verbunden ist, verbunden wird, wobei jedes portable Endgerät (11, 12, 13) geeignet ist, über Funk mit der genannten Bohrvorrichtung (6) zu kommunizieren, wobei jedes portable Endgerät (11, 12, 13) des genannten Satzes von an der genannten Tankstelle (2) verfügbaren portablen Endgeräten mit jeder der Zapfsäulen (21, 24) der genannten Tankstelle (2) in Verbindung gebracht werden kann;
- dass an dem genannten portablen Endgerät (11, 12, 13) ein für das genannte Betanken zu zahlender Betrag von einem Managementsystem (20) der genannten Tankstelle (2) über die genannte Zentralvorrichtung (10) empfangen wird;
- dass an dem genannten ausgewählten portablen Endgerät (11, 12, 13) über Funk von der genannten Bordvorrichtung (6) eine eindeutige Kennung der genannten Bordvorrichtung (6) empfangen wird; und
- dass von dem genannten portablen Endgerät (11, 12, 13) zu dem genannten elektronischen Gebührensystem (3) über die genannte Zentralvorrichtung (10) eine Zahlungsaufforderung gesendet wird, welche den genannten zu zahlenden Betrag und die genannte eindeutige Kennung der genannten Bordvorrichtung (6) aufweist.

## Revendications

1. Système (1) pour le paiement d'un ravitaillement en carburant d'un véhicule (5), comprenant un dispositif embarqué (6) installé dessus, qui supporte un service de péage électronique, ledit système (1) comprenant :
- un appareil central (10) conçu pour être installé au niveau d'une station service (2), ledit appareil central (10) étant connecté avec un système de gestion (20) de ladite station service (2) et avec un système de péage électronique (3) au niveau duquel ledit dispositif embarqué (6) est enregistré ;
- un ensemble de terminaux portables (11, 12, 13) disponibles au niveau de ladite station service (2), chaque terminal portable (11, 12, 13) étant connecté par radio audit appareil central (10) et étant conçu pour communiquer par radio avec ledit dispositif embarqué (6), chaque terminal portable (11, 12, 13) dudit ensemble de terminaux portables disponibles au niveau de ladite station service (2) pouvant être associé à chaque distributeur (21, 24) de ladite station service (2),
dans lequel chaque terminal portable (11, 12, 13) est conçu recevoir, après l'activation de celui-ci par un opérateur de ravitaillement en carburant, après que ledit ravitaillement en carburant dudit véhicule (5) a été effectué au niveau de ladite station service (2), de la part dudit système de gestion (20), par l'intermédiaire dudit appareil central (10), un montant à payer pour ledit ravitaillement en carburant, pour recevoir par radio, de la part dudit dispositif embarqué (6), un identifiant unique dudit dispositif embarqué (6) et pour envoyer, audit système de péage électronique (3), par l'intermédiaire dudit appareil central (10) une demande de paiement comprenant ledit montant à payer et ledit identifiant unique dudit dispositif embarqué (6).

2. Système (1) selon la revendication 1, dans lequel ledit appareil central (10) à est conçu pour recevoir, après la réception d'une demande d'obtention dudit montant à payer de la part de l'un dudit ensemble de terminaux portables (11, 12, 13), de la part dudit système de gestion (20), une liste de distributeurs (21, 22, 23, 24) de ladite station service (2) avec les montants respectifs à payer pour le dernier ravitaillement en carburant effectué, ledit terminal portable (11, 12, 13) étant conçu pour recevoir ladite liste de la part dudit appareil central (10), ledit montant à payer pouvant être sélectionné par ledit opérateur de ravitaillement en carburant dans ladite liste.

3. Système (1) selon l'une des revendications précédentes, dans lequel ledit appareil central (10) est connecté audit système de gestion (20) au moyen d'un LAN, Local Area Network, implémenté dans ladite station service (2).

4. Système (1) selon l'une des revendications précédentes, comprenant en outre un serveur proxy (30) agissant comme un intermédiaire entre ledit appareil central (10) et ledit système de péage électronique (3), ledit appareil central (10) étant connecté audit serveur proxy (30) via un réseau radio mobile (4) auquel ledit serveur proxy (30) est connecté via un APN, Access Point Network, privé.

5. Système (1) selon la revendication 4, dans lequel ladite demande de paiement comprend également un identifiant dudit terminal portable (11, 12, 13) et dans lequel ledit serveur proxy (30) est conçu pour valider ladite demande de paiement sur la base dudit identifiant dudit terminal portable (11, 12, 13).

6. Système (1) selon la revendication 4 ou 5, dans lequel ledit serveur proxy (30) est également conçu pour vérifier si ladite demande de paiement est envoyée à partir dudit terminal portable (11, 12, 13) dans un temps prédéterminé depuis la fin dudit ravitaillement en carburant et pour transmettre ladite demande de paiement audit système de péage électronique (3) seulement si la réponse est affirmative.

7. Système (1) selon l'une des revendications précédentes, dans lequel la puissance de transmission dudit appareil central (10) en direction dudit ensemble de terminaux portables (11, 12, 13) est inférieure à 25 mW.

8. Système (1) selon l'une des revendications précédentes, dans lequel une liaison radio entre chaque terminal portable dudit ensemble de terminaux portables (11, 12, 13) et ledit appareil central (10) est munie d'au moins un des mécanismes de sécurité suivants :
- ledit appareil central (10) est conçu pour transmettre des signaux radio non visibles pour des dispositifs autres que ledit ensemble de terminaux portables (11, 12, 13) ; et/ou
- ledit appareil central (10) est conçu avec une liste d'adresses MAC autorisée à s'associer à son réseau radio ; et/ou
- les communications sur ladite liaison radio entre ledit appareil central (10) et ledit ensemble de terminaux portables (11, 12, 13) sont cryptées.

9. Système (1) selon l'une des revendications précédentes, dans lequel chaque terminal portable (11, 12, 13) est conçu montrer, lors de l'activation de celui-ci, sur un écran de celui-ci, une liste d'opérations possibles, ladite liste d'opérations possibles comprenant une opération de paiement, et pour envoyer audit système de gestion (20), par l'intermédiaire dudit appareil central (10) une demande d'obtention dudit montant à payer en réponse à la sélection de ladite opération de paiement dans ladite liste d'opérations possibles par ledit opérateur de ravitaillement en carburant.

10. Système (1) selon l'une des revendications précédentes, dans lequel ledit appareil central (10) est conçu pour recevoir, de la part dudit système de péage électronique (3) une notification de paiement échoué ou réussi et pour transmettre ladite notification de paiement échoué ou réussi audit système de gestion (20) et audit terminal portable (11, 12, 13).

11. Système (1) selon l'une des revendications précédentes, dans lequel ledit système (1) est en outre conçu pour demander, après que ledit système de péage électrode (3) a effectué ladite opération de paiement conformément à ladite demande de paiement, audit système de péage électronique (3), une annulation de ladite opération de paiement.

12. Système (1) selon l'une des revendications précédentes, dans lequel ledit appareil central (10) est implémenté à l'intérieur dudit système de gestion (20) de la dite station service (2).

13. Procédé de paiement d'un ravitaillement en carburant d'un véhicule (5) avec un dispositif embarqué (6) installé à bord, ledit dispositif embarqué (6) supportant un service de péage électronique proposé par un système de péage électronique (3) auprès duquel ledit dispositif embarqué (6) est enregistré, ledit procédé comprenant :
- après que ledit ravitaillement en carburant a été effectué au niveau d'une station service (2), l'activation, par un opérateur de ravitaillement en carburant, d'un terminal portable (11, 12, 13) sélectionné parmi un ensemble de terminaux portables (11, 12, 13) disponibles au niveau de ladite station service (2), chaque terminal portable (11, 12, 13) étant connecté par radio avec un appareil central (10) placé au niveau de ladite station service (2) et connecté avec ledit système de péage électronique (3), chaque terminal portable (11, 12, 13) étant conçu pour communiquer par radio avec ledit dispositif embarqué (6), chaque terminal portable (11, 12, 13) dudit ensemble de terminaux portables disponibles au niveau de ladite station service (2) pouvant être associé à chaque distributeur (21, 24) de ladite station service (2) ;
- au niveau dudit terminal portable (11, 12, 13), la réception d'un montant à payer pour ledit ravitaillement en carburant, de la part d'un système de gestion (20) de ladite station service (2) par l'intermédiaire dudit appareil central (10) ;
- au niveau dudit terminal portable (11, 12, 13), la réception par radio, de la part dudit dispositif embarqué (6), d'un identifiant unique dudit dispositif embarqué (6) ; et
- l'envoi, à partir dudit terminal portable (11, 12, 13), audit système de péage électronique (3), par l'intermédiaire dudit appareil central (10) d'une demande de paiement comprenant ledit montant à payer et ledit identifiant unique dudit dispositif embarqué (6).
